Europäisches Patentamt

European Patent Office

Office européen des brevets

(19)

(11) EP 0 709 272 A1

## (12) DEMANDE DE BREVET EUROPEEN

(43) Date de publication:
**01.05.1996 Bulletin 1996/18**

(51) Int Cl.6: **B61L 27/04, B61L 3/00, B60L 15/20, B60L 15/00**

(21) Numéro de dépôt: 95402354.5

(22) Date de dépôt: **23.10.1995**

(84) Etats contractants désignés:
**AT BE CH DE DK ES GB GR IE IT LI LU MC NL PT SE**

(30) Priorité: **26.10.1994 FR 9412818**

(71) Demandeur: **GEC ALSTHOM TRANSPORT SA F-75016 Paris (FR)**

(72) Inventeurs:
  • **Benoliel, Serge F-75013 Paris (FR)**

  • **Feray-Beaumont, Stephane F-78730 St. Arnoult en Yvelines (FR)**
  • **Dehbonei, Babak F-93800 Epinay sur Seine (FR)**

(74) Mandataire: **Gosse, Michel et al SOSPI 14-16, rue de la Baume F-75008 Paris (FR)**

(54) **Système de pilotage automatique et procédé d'élaboration d'une consigne d'accélération**

(57) La présente invention porte sur un système de pilotage automatique d'un véhicule, caractérisé en ce qu'il comprend:

- des moyens d'évaluation (1) de la distance de commutation $D_{commutation}$,

- des moyens de calcul (2) d'une consigne de vitesse Vcons,

- des moyens d'élaboration (3) d'une consigne d'accélération $\gamma$cons,

- des moyens d'élaboration (5) d'une consigne de décélération $\gamma_{freinage}$, et

- des moyens de génération (4) d'une commande de traction T.

La présente invention porte également sur un procédé d'élaboration d'une consigne d'accélération.

FIG.1

## Description

La présente invention concerne les systèmes et procédés permettant le traitement des arrêts précis, par exemple d'un véhicule ferroviaire, en général, et porte, plus particulièrement un système de pilotage automatique et un procédé d'élaboration d'une consigne d'accélération.

L'article "DESIGN, REALISATION, AND IMPROVEMENT OF AN OPTIMUM FUZZY CONTROLLER FOR A RUNNING TRAIN", de N. GENG et I. MUTA, publié dans Japanese Journal of Fuzzy Theory and Systems, Volume 5, Number 1, 1993, pages 133 à 146, et l'article "TOTAL SYSTEM FOR RAPID TRANSIT AND TRENDS IN CONTROL ELECTRONICS FOR RAILWAY VEHICLES", de A. OAZAMA et M. NOMI, publié dans Hitachi Review, Vol. 35 (1986), N°. 6, pages 297 à 304, illustrent les systèmes de pilotage automatique pour train de l'art antérieur.

Les dispositifs d'élaboration de la consigne d'accélération de l'art antérieur sont basés sur des modèles de poursuite linéaire.

Conformément à une première solution connue, la consigne d'accélération est dérivée directement de la vitesse du train et de la position courante du train.

Un inconvénient de ce premier dispositif d'élaboration de la consigne d'accélération de l'art antérieur, est qu'il n'est pas possible d'assurer un arrêt précis du train du fait que le calcul devient erratique à proximité du point d'arrêt.

Un autre inconvénient de ce premier dispositif d'élaboration de la consigne d'accélération de l'art antérieur, est qu'il ne permet pas d'arrêter le train dans un temps prévisible.

Une autre solution de l'état de la technique consiste à introduire dans le calcul précédent de la consigne d'accélération, une consigne d'accélération de référence qui devient la consigne d'accélération à l'approche du point but.

Un inconvénient de cet autre dispositif d'élaboration de la consigne d'accélération de l'art antérieur, est qu'il ne permet pas de maîtriser la durée du freinage.

Aussi un but de l'invention est-il un système de pilotage automatique et un procédé d'élaboration d'une consigne d'accélération permettant l'obtention d'un temps d'arrêt déterminé tout en assurant une bonne répétitivité de la position d'arrêt.

L'invention porte sur un système de pilotage automatique d'un véhicule caractérisé en ce qu'il comprend:

- des moyens d'évaluation de la distance de commutation $D_{commutation}$,
- des moyens de calcul d'une consigne de vitesse Vcons,
- des moyens d'élaboration d'une consigne d'accélération $\gamma$cons,
- des moyens d'élaboration d'une consigne de décélération $\gamma_{freinage}$, et
- des moyens de génération d'une commande de traction T.

Le système de pilotage automatique de l'invention est susceptible de comprendre un système de traitement (5) des arrêts précis, comprenant au moins un système à inférence floue SIF, dans lequel les règles floues du système à inférence floue SIF ont pour effet de ramener le train, lorsque ce dernier n'est pas proche du point but, sur une courbe de décélération constante prédéterminée (12).

Le système de pilotage automatique de l'invention est susceptible de comporter un enregistrement de plusieurs trajectoires de référence (8-10) correspondant à des décélérations connues du véhicule.

Le déplacement $D_{commutation}$ est estimé par l'équation suivante:

$$D_{commutation}=\frac{V^2_{anticipée}}{2\gamma_{freinage}}+V_{anticipée.}(retard+Tr)$$

où

| | |
|---|---|
| *retard* | est le retard pur du train, c'est-à-dire la durée séparant l'instant d'une commande et le début de la réaction du train à cette commande, |
| *Tr* | est le temps de réponse du véhicule, c'est-à-dire la durée séparant le début de la réaction du train et la fin de la réaction pour une commande donnée, |
| $V_{anticipée}$ | est la vitesse du véhicule dans *(retard+Tr)* secondes, |
| $\gamma_{freinage}$ | est la décélération de référence pour un freinage en station. |

L'invention porte également sur un système de pilotage automatique d'un véhicule, caractérisé en ce qu'il comprend des moyens de description de la situation d'un véhicule au moyen d'une variable $\alpha$, ladite variable $\alpha$ caractérisant la position du train par rapport à plusieurs trajectoires de référence correspondant à des décélérations connues du véhicule.

La variable $\alpha$ est donnée par l'expression:

EP 0 709 272 A1

$$\alpha = \frac{D_0 - D_{courant}}{D_0 - D_2},$$

où

$D_0$  est la distance d'arrêt du train si l'on applique une première décélération de référence $\gamma_0$, cette décélération est constante et connue à priori,

$D_2$  est la distance d'arrêt du train si l'on applique une seconde décélération $\gamma_2$, cette seconde dévélération est constante,

$D_{courant}$  est la distance du point courant au point but.

L'invention a également pour objet un procédé d'élaboration d'une consigne d'accélération dans un système de pilotage automatique d'un véhicule, caractérisé par la description de la situation d'un véhicule au moyen d'une variable $\alpha$, ladite variable $\alpha$ caractérisant la position du train par rapport à plusieurs trajectoires de référence correspondant à des décélérations connues du véhicule.

Dans le procédé selon cet objet, la variable $\alpha$ est donnée par l'expression

$$\alpha = \frac{D_0 - D_{courant}}{D_0 - D_2},$$

où

$D_0$  est la distance d'arrêt du train si l'on applique une première décélération de référence $\gamma_0$, cette décélération est constante et connue à priori,

$D_2$  est la distance d'arrêt du train si l'on applique une seconde décélération $\gamma_2$, cette seconde dévélération est constante,

$D_{courant}$  est la distance du point courant au point but.

La procédure d'arrêt précis est déclenchée lorsqu'un freinage, d'une valeur de référence prédéterminée appliqué à partir de l'instant présent et en tenant compte des constantes temporelles du véhicule, engendrerait un déplacement $D_{commutation}$ du véhicule conduisant celui-ci au voisinage du point d'arrêt en station et non au point but.

Le déplacement $D_{commutation}$ est estimé par l'équation suivante:

$$D_{commutation} = \frac{V^2_{anticipée}}{2\gamma_{freinage}} + V_{anticipée.}(retard + Tr)$$

où

$retard$  est le retard pur du train, c'est-à-dire la durée séparant l'instant d'une commande et le début de la réaction du train à cette commande,

$Tr$  est le temps de réponse du véhicule, c'est-à-dire la durée séparant le début de la réaction du train et la fin de la réaction pour une commande donnée,

$V_{anticipée}$  est la vitesse du véhicule dans ($retard + Tr$) secondes,

$\gamma_{freinage}$  est la décélération de référence pour un freinage en station.

Un avantage du système de pilotage automatique et du procédé d'élaboration d'une consigne d'accélération de l'invention est une précision de l'arrêt de l'ordre de cinq centimètres en cas de recalage en position pendant la phase d'arrêt.

Un autre avantage du système de pilotage automatique et du procédé d'élaboration d'une consigne d'accélération de l'invention est que le temps de freinage est précis et prévisible.

Un autre avantage du système de pilotage automatique et du procédé d'élaboration d'une consigne d'accélération de l'invention est l'insensibilité aux changements de charge et de caractéristiques des véhicules.

Un autre avantage du système de pilotage automatique et du procédé d'élaboration d'une consigne d'accélération de l'invention est sa robustesse.

D'autres buts, caractéristiques et avantages de l'invention apparaîtront à la lecture de la description du mode de réalisation préféré du système de traitement des arrêts précis, du système de pilotage automatique comportant un tel système et du procédé d'élaboration d'une consigne d'accélération dans un tel système, description faite en liaison avec les dessins joints dans lesquels:

- la figure 1 représente l'architecture générale d'un mode de réalisation préféré du système de pilotage automatique conforme à l'invention,

3

- la figure 2 illustre un ensemble flou de type triangle défini par l'abscisse de trois sommets d'un triangle,
- la figure 3 représente un schéma de principe d'un mode de réalisation préféré du système de traitement des arrêts précis conforme à l'invention,
- la figure 4 illustre des trajectoires de phase de référence utilisées lors du traitement des arrêts précis selon l'invention.

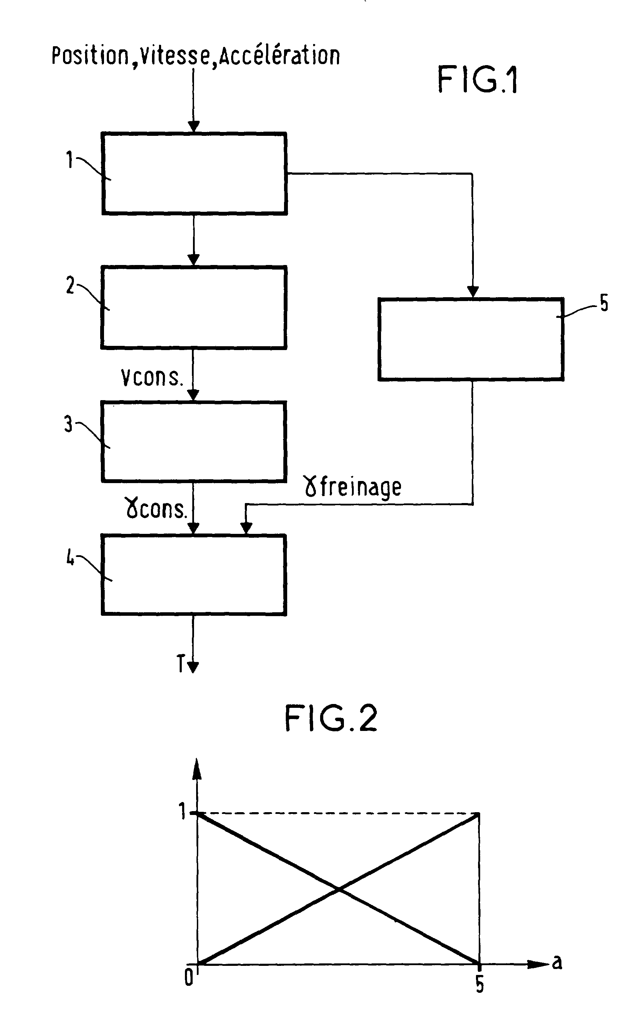

La figure 1 représente l'architecture générale d'un mode de réalisation préféré du système de pilotage automatique selon l'invention.

Il ressort de cette figure 1 trois grandes étapes 2 à 4 pour l'obtention de la commande de traction du véhicule et deux étapes 1 et 5 de traitement des arrêts précis faisant plus particulièrement l'objet de l'invention.

Une première étape 1 correspond à l'évaluation de la distance de commutation.

Par distance de commutation il faut comprendre la distance de déclenchement de la procédure d'arrêt. Quand la distance à parcourir devient égale à la distance de commutation, le système décrit entre en action. Cette distance est calculée au moyen de l'expression suivante:

$$D_{commutation} = \frac{V^2_{anticipée}}{2\gamma_{freinage\text{-}service}} + V_{anticipée}.(retard + Tr)$$

où

$$\frac{V^2_{anticipée}}{2\gamma_{freinage\text{-}service}}$$

est la distance parcourue quand le train est à la vitesse $V_{anticipée}$ et qu'on lui applique une décélération constante $\gamma_{freinage\text{-}service}$ correspondant au freinage de service du train,

$V_{anticipée}.(retard + Tr)$ est la distance parcourue par le train pendant le temps de propagation de la commande si la décision de commutation est prise au temps présent.

Cette étape 1 permet le lancement de la procédure de traitement des arrêts précis.

Ce traitement des arrêts précis fait l'objet d'une cinquième étape 5 correspondant à l'élaboration d'une consigne de décélération $\gamma_{freinage}$.

Ce traitement prend en compte le critère de robustesse aux recalages de position.

Par robustesse aux recalages de position il faut comprendre l'aptitude du système à absorber les mises à jour de la distance au point-but effectuées à l'approche de la station, par exemple par des balises au sol. Ces balises permettent de corriger l'information de distance restant à parcourir. Cette information, par exemple donnée par des capteurs embarqués, peut être très différente de la distance réelle du fait, par exemple, du bruit de mesure. Ces recalages provoquent des fonctionnements très gégradés dans les solutions de l'état de la technique.

Une deuxième étape 2 correspond au calcul d'une consigne de vitesse Vcons.

Ces calculs prennent en compte des données telles que la gestion du temps de parcours, le rattrapage des retards, l'optimisation de l'énergie et l'asservissement pour les réductions de vitesses.

Une troisième étape 3 correspond à l'élaboration d'une consigne d'accélération γcons.

Cette étape prend en compte les limitations d'accélération.

Une quatrième étape 4 correspond à la génération d'une commande de traction T.

Cette étape prend en compte la robustesse aux variations de charge et aux mesures de vitesse.

La position et la vitesse du véhicule, ainsi que les ordres de ralentissement sont des informations fournies au véhicule durant le parcours.

A l'inverse, la consigne sur le temps de parcours jusqu'à la prochaine station, le profil de la voie, les points à protéger, la marches de référence et les caractéristiques du train sont des informations soit fournies en station, soit transmises par les équipements au sol, soit en mémoire dans le système de pilotage automatique.

Conformément au système de pilotage automatique de l'invention, les étapes 1 et 5 sont traitées par des systèmes dits à inférence floue associés à des systèmes à logique non floue.

Les étapes deux à quatre sont susceptibles d'être traitées par des systèmes connus de l'automatisme classique ou sont traitées, de préférence, par des systèmes également à inférence floue associés à des systèmes à logique non floue.

Les systèmes à inférence floue utilisés de préférence dans le système de pilotage automatique de l'invention sont du type SUGENO.

La conclusion des règles est une combinaison linéaire des valeurs des entrées.

Un exemple de syntaxe des systèmes à inférence floue SIF utilisés dans le système de pilotage automatique de l'invention est représenté dans le tableau 1.

Tableau 1

| /* Définition des variables */ | | | | | | |
|---|---|---|---|---|---|---|
| | | | | | | |
| variable entrée a | 0 | 5; | | | | |
| variable entrée b | 0 | 1; | | | | |
| variable commande c | 0 | 1 | | sugeno; | | |
| | | | | | | |
| /* Définition des ensembles flous */ | | | | | | |
| | | | | | | |
| a petit triangle | 0 | 0 | 5; | | | |
| a grand triangle | 0 | 5 | 5; | | | |
| b petit triangle | 0 | 0 | 1; | | | |
| b grand triangle | 0 | 1 | 1; | | | |
| | | | | | | |
| /* Définition des règles floues */ | | | | | | |
| | | | | | | |
| règle r1 si a est petit et b est petit | | | | | alors c est 1 2 3; | |
| règle r2 si a est grand et b est petit | | | | | alors c est 1 0 0; | |

La définition des variables donne la liste des variables d'entrée et de sortie du système à inférence floue ainsi que leur domaine de variation respectif.

La définition des ensembles flous donne la liste des ensembles flous pour chaque variable, leur type et leurs paramètres caractéristiques.

Par exemple, un ensemble flou de type triangle est défini par l'abscisse de trois sommets d'un triangle. Un tel triangle est représenté à la figure 2.

La définition des règles donne la liste des règles floues applicables.

L'interprétation de la règle r1 est la suivante: Lorsque a et b satisfont les prémisses de la règle, alors c = 1+2a+3b.

Si la liste de sortie est réduite à une seule valeur, alors la conclusion de la règle prend directement cette valeur.

Le traitement des arrêts précis constitue un problème particulier dans les dispositifs et procédés de pilotage automatique.

Il s'agit d'amener le train à un endroit précis, appelée point but, avec une vitesse déterminée (nulle) tout en respectant les contraintes de temps de parcours.

Afin d'améliorer le traitement des arrêts précis, la phase de freinage a été scindée en deux parties.

Dans une première partie, le but recherché est de rejoindre le plus rapidement possible la décélération de référence afin de respecter au mieux une durée de freinage constante.

Dans la seconde phase, le but principal est de s'arrêter exactement au point but.

La procédure d'arrêt précis est déclenchée lorsqu'un freinage, d'une valeur de référence prédéterminée appliqué à partir de l'instant présent et en tenant compte des constantes temporelles du train (retard et temps de réponse), engendrerait un déplacement du train conduisant celui-ci au voisinage du point d'arrêt en station et non au point but.

Ce déplacement $D_{commutation}$ est estimé par l'équation suivante:

$$D_{commutation} = \frac{V^2_{anticipée}}{2\gamma_{freinage}} + V_{anticipée}.(retard + Tr)$$

où

retard      est le retard pur du train, c'est-à-dire la durée séparant l'instant d'une commande et le début de la réaction du train à cette commande,

Tr      est le temps de réponse du véhicule, c'est-à-dire la durée séparant le début de la réaction du train et la fin de la réaction pour une commande donnée,

$V_{anticipée}$      est la vitesse du véhicule dans *(retard+Tr)* secondes,

$\gamma_{freinage}$ est la décélération de référence pour un freinage en station.

Tant que la distance de commutation $D_{commutation}$ engendrée est inférieure à la distance au point but, le traitement général est appliqué.

L'anticipation est réalisée sur une seconde, qui est l'ordre de grandeur de la valeur du retard pur.

$$V_{anticipée} = V_{courante} + \gamma_{courante}.retard$$

$$X_{anticipée} = X_{courante} + \frac{(V_{courante} + V_{anticipée})}{2}.retard$$

où

$V_{anticipée}$ correspond à la vitesse du train dans "retard" secondes puisque dans l'intervalle de temps correspondant, l'accélération ne pourra pas évoluer du fait de la commande. On considère que les influences extérieures sont négligeables sur une petite durée,

$X_{anticipée}$ est la position du train dans "retard" secondes. La vitesse évoluant du fait de l'accélération $\gamma_{courante}$, on utilise une moyenne entre la vitesse courante et la vitesse anticipée pour obtenir la nouvelle position.

La décélération de référence pour le freinage est fixée à 0,7 m/s². Elle correspond à la valeur de $\gamma_{freinage-service}$ utilisée dans le calcul de $D_{commutation}$.

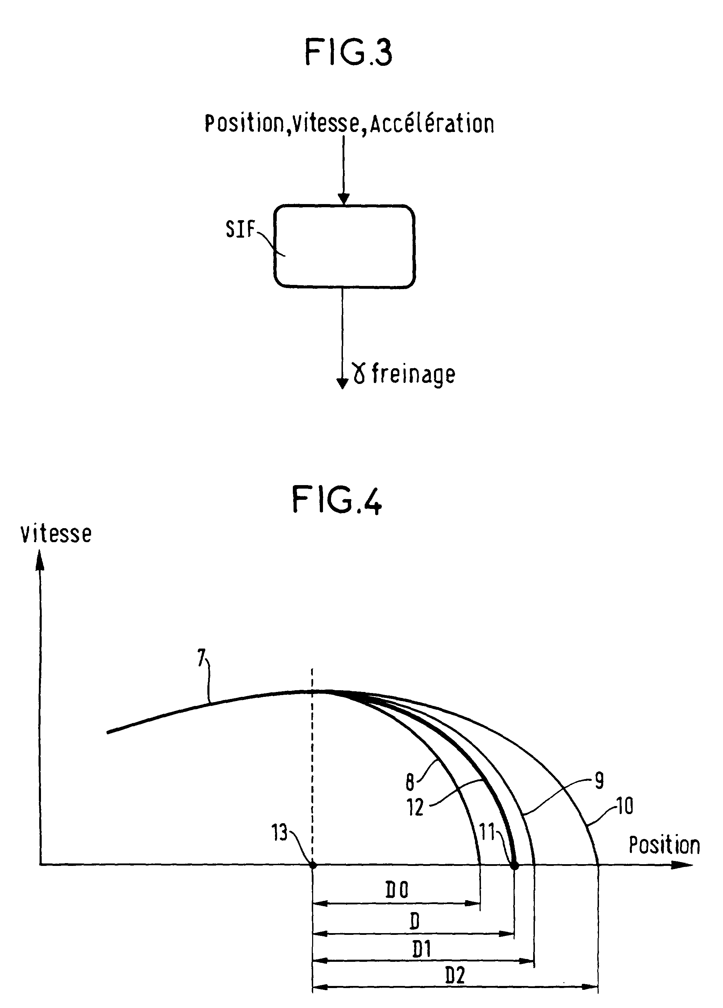

La figure 3 représente un schéma de principe d'un mode de réalisation préféré du système de traitement des arrêts précis selon l'invention.

Le système de traitement des arrêts précis selon l'invention se compose d'une branche comportant un système a inférence floue SIF.

A titre d'exemple, le tableau 2 montre un exemple de syntaxe du système à inférence floue SIF utilisé pour le traitement des arrêts précis.

```
/* Définition des variables */

variable entrée alpha      -1          1.5;
variable entrée dist        0         50;
variable entrée acc        -1          1;        sugeno;


/* Définition des ensembles flous */

alpha   très loin     trapèze      -1    -1    -0.5    0;
alpha   loin          trapèze      -0.5   0     0.2    0.771;
alpha   pile          triangle      0.2   0.771        1;
alpha   proche        triangle      0.771        1     1.5;
alpha   très proche   triangle      0.771        1.5   1.5;

dist    très proche   triangle      0     0    15;
dist    proche        trapèze       0     0    15    50;
dist    loin          triangle     15    50    50;
```

```
/* Définition des règles floues */

règle r0 si alpha est très loin et dist est loin
                                    alors acc est 0;
règle r1 si alpha est loin et dist est loin
                                    alors acc est -0.2;
règle r2 si alpha est pile et dist est loin
                                    alors acc est -0.7;
règle r3 si alpha est proche et dist est loin
                                    alors acc est -1;

règle r10 si alpha est très loin et dist est proche
                                    alors acc est 0;
règle r11 si alpha est loin et dist est proche
                                    alors acc est -0.37;
règle r12 si alpha est pile et dist est proche
                                    alors acc est -0.7;
règle r13 si alpha est proche et dist est proche
                                    alors acc est -0.93;

règle r00 si alpha est très loin et dist est très proche
                                    alors acc est -0.95;
```

Tableau 2

Les entrées du système à inférence floue SIF du système de traitement des arrêts précis sont:

- un paramètre $\alpha$ indiquant la situation du train, et
- la distance D au point but.

La sortie du système à inférence floue SIF est la décélération $\gamma_{freinage}$ à respecter pour assurer la précision de l'arrêt.

Le traitement des arrêts précis, conformément à l'invention, consiste à positionner la trajectoire de phase 7 (vitesse-position) par rapport à certaines trajectoires de références 8 à 10 correspondant à des décélérations connues et à évoluer de manière souple entre ces trajectoires.

La figure 4 illustre ces trajectoires de références 8 à 10.

Le système à inférence floue SIF détermine une consigne de décélération $\gamma_{freinage}$ qui amène le train à s'arrêter au point but 11 avec la meilleure précision possible et sans dépassement.

Sur la figure 4, le point noté 13 indique la position du train pour laquelle le déclenchement de la procédure d'arrêt précis est effectué.

Les règles floues données ci-dessus ont pour effet de ramener le train, lorsque ce dernier n'est pas proche du point but, sur une courbe de décélération constante prédéterminée 12, le plus rapidement possible et de façon souple, de manière à maîtriser la durée $D$ de la phase de freinage.

Au fur et à mesure que le train se rapproche du point but 11, les règles floues utilisées tendent à favoriser la précision d'arrêt au moyen d'un asservissement en position, au détriment d'un asservissement sur une décélération constante.

La situation du train est donnée par le calcul d'un paramètre $\alpha$ permettant de positionner le train par rapport aux courbes de décélération de référence 8 à 10.

Ce paramètre $\alpha$ est donné par l'expression suivante:

$$\alpha = \frac{D_0 - D_{courant}}{D_0 - D_2},$$

où

$D_0$ est la distance d'arrêt du train si l'on applique une première décélération de référence $\gamma_0$, cette décélération est constante et connue à priori,

$D2$ est la distance d'arrêt du train si l'on applique une seconde décélération $\gamma_2$, cette seconde dévélération est constante,

$D_{courant}$ est la distance du point courant au point but.

**Revendications**

1. Système de pilotage automatique d'un véhicule, caractérisé en ce qu'il comprend:

   - des moyens d'évaluation (1) de la distance de commutation $D_{commutation}$,
   - des moyens de calcul (2) d'une consigne de vitesse Vcons,
   - des moyens d'élaboration (3) d'une consigne d'accélération $\gamma$cons,
   - des moyens d'élaboration (5) d'une consigne de décélération $\gamma_{freinage}$, et
   - des moyens de génération (4) d'une commande de traction T.

2. Système de pilotage automatique d'un véhicule selon la revendication 1, ledit système comprenant un système de traitement (5) des arrêts précis comprenant au moins un système à inférence floue SIF, les règles floues du système à inférence floue SIF ont pour effet de ramener le train, lorsque ce dernier n'est pas proche du point but, sur une courbe de décélération constante prédéterminée (12).

3. Système selon la revendication 2 comportant un enregistrement de plusieurs trajectoires de référence (8-10) correspondant à des décélérations connues du véhicule.

4. Système selon la revendication 3, dans lequel le déplacement $D_{commutation}$ est estimé par l'équation suivante:

$$D_{commutation} = \frac{V^2_{anticipée}}{2\gamma_{freinage}} + V_{anticipée}.(retard + Tr)$$

où

$retard$ est le retard pur du train, c'est-à-dire la durée séparant l'instant d'une commande et le début de la réaction du train à cette commande,

$Tr$ est le temps de réponse du véhicule, c'est-à-dire la durée séparant le début de la réaction du train et la fin de la réaction pour une commande donnée,

$V_{anticipée}$ est la vitesse du véhicule dans ($retard + Tr$) secondes,

$\gamma_{freinage}$ est la décélération de référence pour un freinage en station.

5. Système de pilotage automatique d'un véhicule, caractérisé en ce qu'il comprend des moyens de description de la situation d'un véhicule au moyen d'une variable $\alpha$, ladite variable $\alpha$ caractérisant la position du train par rapport à plusieurs trajectoires de référence (8-10) correspondant à des décélérations connues du véhicule.

6. Système selon la revendication 5, dans lequel la variable $\alpha$ est donnée par l'expression:

$$\alpha = \frac{D_0 - D_{courant}}{D_0 - D_2},$$

où

$D_0$ est la distance d'arrêt du train si l'on applique une première décélération de référence $\gamma_0$, cette décélération est constante et connue à priori,

$D_2$ est la distance d'arrêt du train si l'on applique une seconde décélération $\gamma_2$, cette seconde dévélération est constante,

$D_{courant}$ est la distance du point courant au point but.

**7.** Procédé d'élaboration d'une consigne d'accélération d'un véhicule dans un système de pilotage automatique selon l'une quelconque des revendications 1 à 6, caractérisé par la description de la situation d'un véhicule au moyen d'une variable α, ladite variable α caractérisant la position du train par rapport à plusieurs trajectoires de référence (8-10) correspondant à des décélérations connues du véhicule.

**8.** Procédé selon la revendication 7, dans lequel la variable α est donnée par l'expression

$$\alpha = \frac{D_0 - D_{courant}}{D_0 - D_2},$$

où

$D_0$ est la distance d'arrêt du train si l'on applique une première décélération de référence $\gamma_0$, cette décélération est constante et connue à priori,

$D_2$ est la distance d'arrêt du train si l'on applique une seconde décélération $\gamma_2$, cette seconde dévélération est constante,

$D_{courant}$ est la distance du point courant au point but.

**9.** Procédé selon l'une quelconque des revendications précédentes dans lequel la procédure d'arrêt précis est déclenchée lorsqu'un freinage, d'une valeur de référence prédéterminée appliqué à partir de l'instant présent et en tenant compte des constantes temporelles du véhicule, engendrerait un déplacement $D_{commutation}$ du véhicule conduisant celui-ci au voisinage du point d'arrêt en station et non au point but.

**10.** Procédé selon la revendication 9 dans lequel le déplacement $D_{commutation}$ est estimé par l'équation suivante:

$$D_{commutation} = \frac{V^2_{anticipée}}{2\gamma_{freinage}} + V_{anticipée.}(retard + Tr)$$

où

$retard$ est le retard pur du train, c'est-à-dire la durée séparant l'instant d'une commande et le début de la réaction du train à cette commande,

$Tr$ est le temps de réponse du véhicule, c'est-à-dire la durée séparant le début de la réaction du train et la fin de la réaction pour une commande donnée,

$V_{anticipée}$ est la vitesse du véhicule dans ($retard + Tr$) secondes,

$\gamma_{freinage}$ est la décélération de référence pour un freinage en station.

Position, Vitesse, Accélération

FIG.1

Vcons.

Yfreinage

Ycons.

T

FIG.2

# FIG.3

# FIG.4

Office européen
des brevets

# RAPPORT DE RECHERCHE EUROPEENNE

Numero de la demande

EP 95 40 2354

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 092 832 (HITACHI, LTD.) abrégé; page 5, ligne 5 - page 14, ligne 2; figures 3-8 *<br>--- | 1-3 | B61L27/04<br>B61L3/00<br>B60L15/20<br>B60L15/00 |
| A | PATENT ABSTRACTS OF JAPAN vol. 15, no. 314 (M-1145) 12 Août 1991 & JP-A-03 117 306 (HITACHI LTD) 20 Mai 1991 * abrégé *<br>--- | 1-3,5 | |
| A | PATENT ABSTRACTS OF JAPAN vol. 15, no. 414 (M-1171) 22 Octobre 1991 & JP-A-03 173 303 (TOSHIBA CORP) 26 Juillet 1991 * abrégé *<br>--- | 1,2 | |
| A | PROCEEDINGS OF THE INTERNATIONAL WORKSHOP ON ARTIFICIAL INTELLIGENCE FOR INDUSTRIAL APPLICATIONS, 25 Mai 1988, HITACHI CITY, JAPAN pages 485 - 489 OSHIMA ET AL. 'OPERATION SYSTEM BASED ON PREDICTIVE FUZZY CONTROL' * le document entier *<br>--- | 1,2 | DOMAINES TECHNIQUES RECHERCHES (Int.Cl.6)<br><br>B61L<br>B60L |
| A | PATENT ABSTRACTS OF JAPAN vol. 17, no. 472 (M-1470) 27 Août 1993 & JP-A-05 112 243 (TOSHIBA CORP) 7 Mai 1993 * abrégé *<br>--- | 1,2 | |
| A | PATENT ABSTRACTS OF JAPAN vol. 18, no. 352 (M-1631) 4 Juillet 1994 & JP-A-06 090 508 (TOSHIBA CORP) 29 Mars 1994 * abrégé *<br>--- | 1,2 | |

-/--

Le présent rapport a été établi pour toutes les revendications

| Lieu de la recherche | Date d'achèvement de la recherche | Examinateur |
|---|---|---|
| BERLIN | 4 Janvier 1996 | Beitner, M |

# EP 0 709 272 A1

Office européen
des brevets

## RAPPORT DE RECHERCHE EUROPEENNE

Numero de la demande

EP 95 40 2354

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 384 695 (NOHMI ET AL.) <br> * abrégé; colonne 3, ligne 50 – colonne 5, ligne 52; figure 4 * <br> --- | 1 | |
| A | GB-A-2 233 118 (E.B. SIGNAL LIMITED) <br> * abrégé; page, ligne 1 – page 3, ligne 22; page 6, ligne 5 – page 8, ligne 14; figures 1, 2 * <br> ----- | 1 | |

DOMAINES TECHNIQUES
RECHERCHES (Int.Cl.6)

Le présent rapport a été établi pour toutes les revendications

| Lieu de la recherche | Date d'achèvement de la recherche | Examinateur |
|---|---|---|
| BERLIN | 4 Janvier 1996 | Beitner, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)